# EUROPEAN PATENT APPLICATION

(11) **EP 3 040 221 A2**
(43) Date of publication of application: **06.07.2016**
(21) Application number: 15178243.0
(22) Date of filing: 24.07.2015
(51) Int. Cl.: B60H 1/00, G06F 3/0488, B60K 35/00

(54) **AIR-CONDITIONER CONTROLLING METHOD AND VEHICLE CONTROL SYSTEM EMPLOYING THE SAME**

(30) Priority: 29.12.2014 TW 103146155
(71) Applicant: Hon Hai Precision Industry Co., Ltd., New Taipei City (TW)
(72) Inventor: LEE, Chia-Yen, New Taipei City (TW)
(74) Representative: Huang, Chongguang

(57) **Abstract**

A vehicle control system and a method for controlling the air-conditioner are provided. The vehicle control system includes a touch screen, an air-conditioner, a storage unit, and a climate control unit. The climate control unit determines a touch buttons as a target touch button when a user touches the touch button displayed on an operation interface, and determines a wind direction control command and a fan speed control command according to a relationship table and the determined target touch button, and controls the air-conditioner to adjust the air volume of an upper air vent and the air volume of a lower air vent of the air-conditioner according to the determined wind direction control command, and control the air-conditioner to adjust the fan speed of the air-conditioner according to the determined fan speed control command.

## Description

### 1. Technical Field

The present disclosure relates to vehicle control system and, more particularly, to a vehicle control system with an air-conditioner and a method for controlling the air-conditioner.

### 2. Description of Related Art

Conventional vehicles, such as a car, or a bus, are usually equipped with an air-conditioner. The air-conditioner includes controls for wind direction adjustment and fan speed adjustment. However, both controls for wind direction adjustment and fan speed adjustment are executed separately by a user, therefore it can be inconvenient and dangerous for the user when the user adjusts wind direction and wind speed separately.

Therefore, it is desirable to provide an air-conditioner controlling method and a vehicle control system to overcome the described limitations.

### BRIEF DESCRIPTION OF THE DRAWINGS

Many aspects of the disclosure can be better understood with reference to the following drawings. The components in the drawings are not necessarily drawn to scale, the emphasis instead being placed upon clearly illustrating the principles of the disclosure. Moreover, in the drawings, like reference numerals designate corresponding parts throughout the several views.
FIG. 1 is a block diagram of a vehicle control system, in accordance with an exemplary embodiment.
FIG. 2 is a diagrammatic view of an operation interface.
FIG. 3 is a diagrammatic view of a corresponding relation table.
FIG. 4 is a block diagram of a climate control unit of the vehicle control system of FIG. 1.
FIG. 5 is a flowchart of a method for controlling the air-conditioner.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. The drawings are not necessarily to scale and the proportions of certain parts may be exaggerated to better illustrate details and features. The description is not to be considered as limiting the scope of the embodiments described herein.

Several definitions that apply throughout this disclosure will now be presented. The term "module" refers to logic embodied in computing or firmware, or to a collection of software instructions, written in a programming language, such as, Java, C, or assembly. One or more software instructions in the modules may be embedded in firmware, such as in an erasable programmable read only memory (EPROM). The modules described herein may be implemented as either software and/or computing modules and may be stored in any type of non-transitory computer-readable medium or other storage device. Some non-limiting examples of non-transitory computer-readable media include CDs, DVDs, BLU-RAY, flash memory, and hard disk drives. The term "comprising" means "including, but not necessarily limited to"; it specifically indicates open-ended inclusion or membership in a so-described combination, group, series and the like. The connection can be such that the objects are permanently connected or releasably connected.

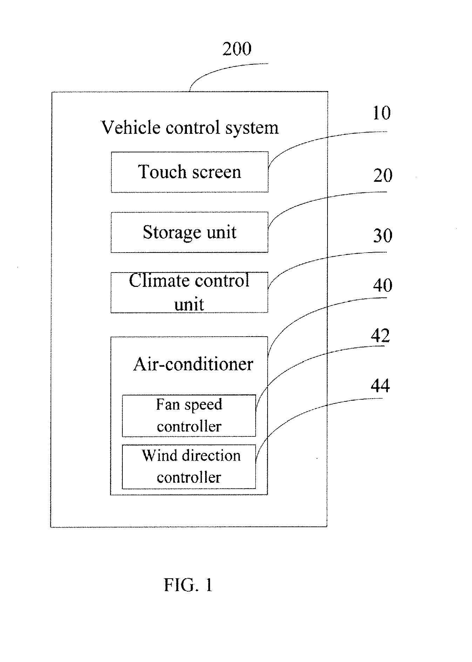

FIG. 1 is a block diagram of a vehicle control system 200, in accordance with an exemplary embodiment. The vehicle control system 200 includes a touch screen 10, a storage unit 20, a climate control unit 30, and an air-conditioner 40. The air-conditioner 40 can include controllers for adjusting for wind direction and fan speed in response to an operation. The air-conditioner 40 includes a fan speed controller 42 and a wind direction controller 44. The fan speed controller 42 adjusts the fan speed of the air-conditioner 40. The wind direction controller 44 adjusts the wind direction of the air-conditioner 40 thus, changing air volume of an upper air vent (not shown) and a lower air vent (not shown) of the air-conditioner 40. The touch screen 10 provides an operation interface 12.

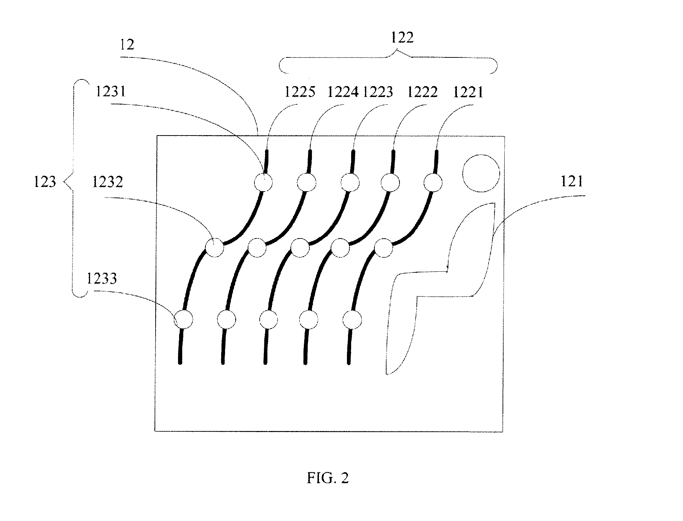

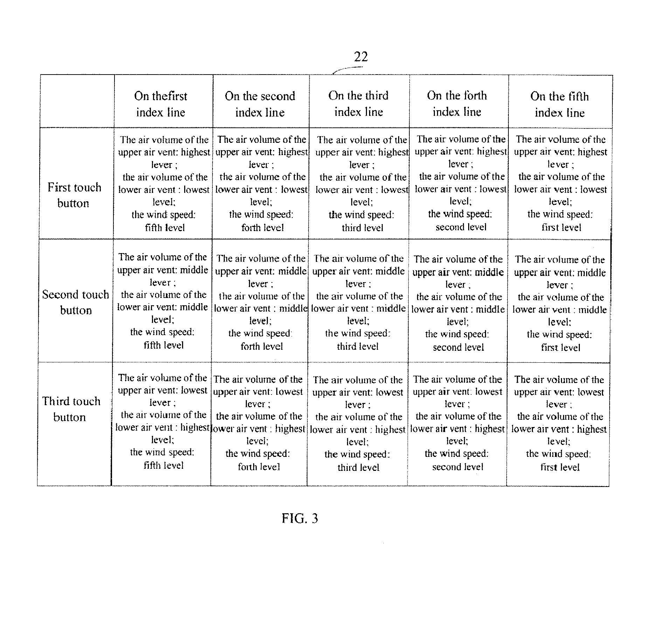

FIG. 2 is a diagrammatic view of an operation interface. The operation interface 12 includes a number of touch buttons 123. The storage unit 20 stores a relationship table 22 (FIG. 3) showing relationships between the touch buttons 123 and control commands. FIG. 3 is a diagrammatic view of the relationship table. Each control command includes a wind direction control command and a fan speed control command. The wind direction control command controls the air volume of the upper air vent and the lower air vent of the air-conditioner 40 of the vehicle control system 200. The fan speed control command controls the fan speed of the air-conditioner 40 of the vehicle control system 200. In detail, the relationship table 22 defines relationships between each touch button 123 and each control command.

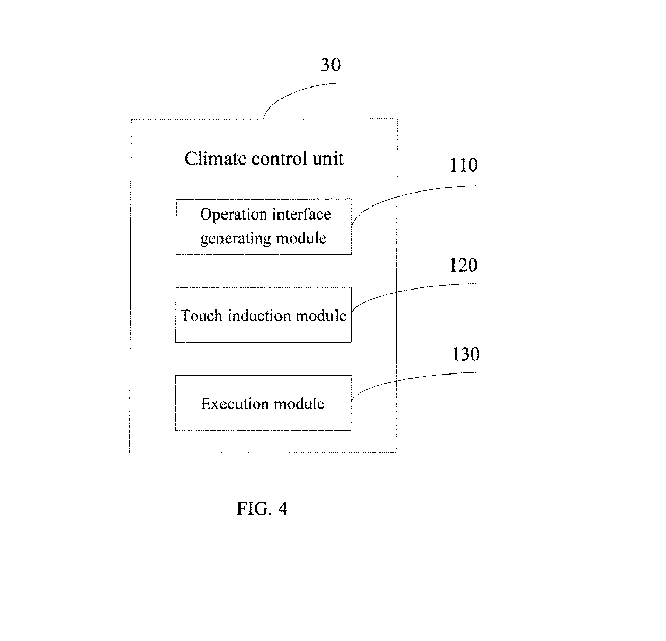

FIG. 4 is a block diagram of a climate control unit of the vehicle control system 200 of FIG. 1. The climate control unit 30 includes an operation interface generating module 110, a touch induction module 120, and an execution module 130.

In the embodiment, the operation interface generating module 110, the touch induction module 120, and the execution module 130 can be collections of software instructions stored in the storage unit 20 of the vehicle control system 200 and executed by the climate control unit 30 of the vehicle control system 200. The operation interface generating module 110, the touch induction module 120, and the execution module 130 also can include functionality represented as hardware or integrated circuits, or as software and hardware combinations, such as a special-purpose processor or a general-purpose processor with special-purpose firmware.

In one embodiment, the climate control unit 30 can be a central processing unit, a digital signal processor, or a single chip, for example. In one embodiment, the storage unit 20 can be an internal storage system, such as a flash memory, a random access memory (RAM) for temporary storage of information, and/or a read-only memory (ROM) for permanent storage of information. The storage unit 20 can also be a storage system, such as a hard disk, a storage card, or a data storage medium. The storage unit 20 can include volatile and/or non-volatile storage devices. In at least one embodiment, the storage unit 20 can include two or more storage devices such that one storage device is a memory and the other storage device is a hard drive. Additionally, one or more storage units 20 can be respectively located either entirely or partially external relative to the vehicle control system 200.

The operation interface generating module 110 generates the operation interface 12 with a number of touch buttons 123 and displays the operation interface 12 on the touch screen 10. FIG. 2 and FIG. 3 illustrate the number of touch buttons 123 are arranged from top to bottom and from left to right on the touch screen 10. When a touch on one touch button 123 is much closer to the top part of the touch screen 10, the wind direction control command corresponding to the touch button 123 sets air volume of upper air vent of the air-conditioner 40 to be greater and sets the air volume of the lower air vent of the air-conditioner 40 to be less. When a touch on one touch button 123 is much closer to the bottom part of the touch screen 10, the wind direction control command corresponding to the touch button 123 sets air volume of upper air vent of the air-conditioner 40 to be less and sets the air volume of the lower air vent of the air-conditioner 40 to be greater. When a touch on one touch button 123 is much closer to the left part of the touch screen 10, the fan speed control command corresponding to the touch button 123 sets the fan speed of the air-conditioner 40 to decrease. When a touch on one touch button 123 is much closer to the right part of the touch screen 10, the fan speed control command corresponding to the touch button 123 sets the fan speed of the air-conditioner 40 to increase.

Furthermore, the operation interface 12 shows a human image 121 in a "sitting" state and a number of index lines 122. The index lines 122 are substantially parallel with an outline of the human image 121. A number of columns of touch buttons 123 are respectively set along each index line 122 in sequence. In the embodiment, an amount of the index lines 122 and the columns of touch buttons 123 are five, and each column of touch buttons 123 includes three touch buttons 123.

FIG. 2 illustrates the five index lines 122 include a first index line 1221, a second index line 1222, a third index line 1223, a fourth index line 1224, and a fifth index line 1225, which are substantially parallel with an outline of the human image 121 and set from a position near the human image 121 in sequence. In detail, the first index line 1221 is nearest to the human image 121, and the fifth index 1225 is furthest from the human image 121. In the embodiment, the different fan speed control commands are used to set the fan speed of the air-conditioner 40 as different levels including a first level, a second level, a third level, a fourth level, and a fifth level.

In detail, the fan speed control command corresponding to one touch button 123 in the first index line 1221 sets the fan speed of the air-conditioner 40 as the fifth level, the fan speed control command corresponding to one touch button 123 in the second index line 1222 sets the fan speed of the air-conditioner 40 as the fourth level, the fan speed control command corresponding to one touch button 123 in the third index line 1223 sets the fan speed of the air-conditioner 40 as the third level, the fan speed control command corresponding to one touch button 123 in the fourth index line 1224 sets the fan speed of the air-conditioner 40 as the second level, the fan speed control command corresponding to one touch button 123 in the fifth index line 1225 sets the fan speed of the air-conditioner 40 as the first level. In the embodiment, the fan speed of the fifth level is the greatest and the fan speed of the first level is the least.

The three touch buttons 123 in each index line 122 includes a first touch button 1231, a second touch button 1232, and a third touch button 1233 set along the index line 122 from up to down. The wind direction control command corresponding to the first touch button 1231 in each index line 122 sets the air volume of the upper air vent of the air-conditioner 40 as a highest level and sets the air volume of the lower air vent of the air-conditioner 40 as a lowest level. The wind direction control command corresponding to the second touch button 1232 in each index line 122 sets the air volume of the upper air vent of the air-conditioner 40 as a middle level and sets the air volume of the lower air vent of the air-conditioner 40 as the middle level. The wind direction control command corresponding to the third touch button 1233 in each index line 122 sets the air volume of the upper air vent of the air-conditioner 40 as the lowest level and set the air volume of the lower air vent of the air-conditioner 40 as the highest level.

The touch induction module 120 determines a touch button 123 as a target touch button when the user touches the touch button 123 displayed on the operation interface 12. For example, when the user touches the first touch button 123 in the first index line 1221 displayed on the operation interface 12, the touch induction module 120 determines the first touch button 1231 as the target touch button.

The execution module 130 determines a wind direction control command and a fan speed control command according to the relationship table 22 and the target touch button determined by the touch induction module 120. Furthermore, the execution module 130 controls the wind direction controller 44 to adjust the air volume of the upper air vent and the air volume of lower air vent of the air-conditioner 40 according to the determined wind direction control command. The execution module 130 controls the fan speed controller 42 to adjust the fan speed of the air-conditioner 40 according to the determined fan speed control command. In an embodiment, the fan speed controller 42 controls an air-conditioner compressor of the air-conditioner 40 to adjust the fan speed of the air-conditioner 40 of the vehicle control system 200, and the wind direction controller 44 controls a baffle to adjust the air volume of the upper air vent and the low air vent of the air-conditioner 40. For example, when the user touches the first touch button 1231 in the first index line 1221, the execution module 130 determines that the wind direction control command corresponding to the first touch button 1231 is setting the air volume of the upper air vent of the air-conditioner 40 as the highest level and setting the air volume of the lower air vent of the air-conditioner 40 as the lowest level, the execution module 130 controls the wind direction controller 44 to adjust the upper air volume of the air-conditioner 40 as the highest level and adjust the air volume of the lower air vent of the air-conditioner 40 as the lowest level according to the determined wind direction control command, and the execution module 130 determines that the fan speed control command corresponding to the first touch button 1231 is setting the fan speed of the air-conditioner 40 as the fifth level, the execution module 130 controls the fan speed controller 42 to adjust the fan speed of the air-conditioner 40 as the fifth level according to the determined fan speed control command.

Therefore, the present disclosure is able to adjust the fan speed and wind direction of the air-conditioner 40 when the user touches a touch button 123 displayed on the operation interface 12, which is beneficial to reduce the operation time.

In other embodiments, the operation interface 12 only displays the touch button 123 and the index line 122.

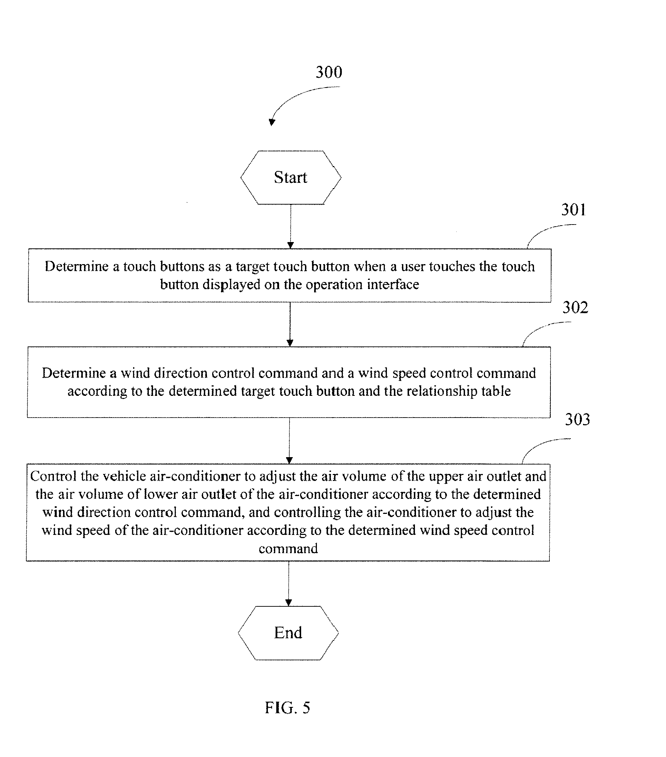

FIG. 5 is a flowchart of a method for controlling an air-conditioner. The example method 300 is provided by way of example, as there are a variety of ways to carry out the method. The method 300 described below can be carried out using the configurations illustrated in FIGS. 1 and 4 for example, and various elements of these figures are referenced in explaining example method 300. Each block shown in FIG. 5 represents one or more processes, methods, or subroutines carried out in the exemplary method 300. Furthermore, the illustrated order of blocks is by example only and the order of the blocks can be changed. The exemplary method 300 can begin at block 301. Depending on the embodiment, additional steps can be added, others removed, and the ordering of the steps can be changed.

At block 301, a touch induction module determines a touch button as a target touch button when a user touches the touch button displayed on an operation interface.

At block 302, an execution module determines a wind direction control command and a fan speed control command according to a relationship table and the target touch button determined by the touch induction module.

At block 303, the execution module controls a wind direction controller to adjust the air volume of an upper air vent and the air volume of a lower air vent of an air-conditioner according to the determined wind direction control command, and controls a fan speed controller to adjust the fan speed of the air-conditioner according to the determined fan speed control command. In the present embodiment, the fan speed controller controls an air-conditioner compressor of the air-conditioner to adjust the fan speed of the air-conditioner of the vehicle control system, and the wind direction controller controls a baffle to adjust the air volume of the upper air vent and the lower air vent of the air-conditioner.

The method 300 further comprises that an operation interface generating module generates the operation interface with a number of touch buttons and displays the operation interface on a touch screen 10. The number of touch buttons is arranged from top to bottom and from left to right on the touch screen. When a touch on one touch button is much closer to the top part of the touch screen, the wind direction control command corresponding to the touch button sets the air volume of upper air vent of the air-conditioner to be greater and sets the air volume of the lower air vent of the air-conditioner to be less. When a touch on one touch button is much closer to the bottom part of the touch screen, the wind direction control command corresponding to the touch button sets air volume of the upper air vent of the air-conditioner to be less and sets the air volume of the lower air vent of the air-conditioner to be greater. When a touch on one touch button is much closer to the left part of the touch screen, the fan speed control command corresponding to the touch button sets the fan speed of the air-conditioner to decrease. When a touch on one touch button is much closer to the right part of the touch screen, the fan speed control command corresponding to the touch button sets the fan speed of the air-conditioner to increase.

Although the present disclosure has been specifically described on the basis of the exemplary embodiment thereof, the disclosure is not to be construed as being limited thereto. Various changes or modifications may be made to the embodiment without departing from the scope and spirit of the disclosure.

## Claims

1. A vehicle control system comprising:
a touch screen configured to provide an operation interface comprising a plurality of touch buttons;
an air-conditioner configured to adjust wind direction and fan speed;
a storage unit configured to store a relationship table showing relationships between the plurality of touch buttons and a plurality of control commands, wherein, each control command comprises a wind direction control command and a fan speed control command; and
at least one climate control unit configured to execute a plurality of modules which are collections of instructions, the plurality of modules comprising:
a touch induction module configured to, upon execution by the climate control unit cause the climate control unit to determine a touch button as a target touch button when a user touches the touch button displayed on the operation interface;
an execution module configured to, upon execution by the climate control unit cause the climate control unit to determine a wind direction control command and a fan speed control command according to the determined target touch button and the relationship table; and
the execution module further configured to control the air-conditioner to adjust the air volume of the upper air vent and the air volume of lower air vent of the air-conditioner according to the determined wind direction control command, and control the air-conditioner to adjust the fan speed of the air-conditioner according to the determined fan speed control command.

2. The vehicle control system as recited in claim 1, wherein the climate control unit is further configured to execute an operation interface generating module, the operation interface generating module is configured to generate the operation interface with the plurality of touch buttons and displays the operation interface on the touch screen.

3. The vehicle control system as recited in claim 2, wherein when a touch on one touch button is much closer to the top part of the touch screen, the wind direction control command corresponding to the touch button sets the air volume of the upper air vent of the air-conditioner to be greater and sets the air volume of the lower air vent of the air-conditioner to be less.

4. The vehicle control system as recited in claim 2, wherein when a touch on one touch button is much closer to the bottom part of the touch screen, the wind direction control command corresponding to the touch button sets the air volume of the upper air vent of the air-conditioner to be less and sets the air volume of the lower air vent of the air-conditioner to be greater.

5. The vehicle control system as recited in claim 2, wherein when a touch on one touch button is much closer to the left part of the touch screen, the fan speed control command corresponding to the touch button sets the fan speed of the air-conditioner to decrease.

6. The vehicle control system as recited in claim 2, wherein when a touch on one touch button is much closer to the right part of the touch screen, the fan speed control command corresponding to the touch button sets the fan speed of the air-conditioner to increase.

7. The vehicle control system as recited in claim 1, wherein the air-conditioner comprises a fan speed controller configured to adjust the fan speed of the air-conditioner and a wind direction controller configured to adjust the air volume of an upper air vent and a lower air vent of the air-conditioner.

8. A method for controlling an air-conditioner adapted for a vehicle control system, wherein the vehicle control system comprises a touch screen configured to provide an operation interface comprising a plurality of touch buttons, an air-conditioner configured to adjust its wind direction and fan speed, a storage unit configured to store a relationship table showing relationships between the plurality of touch buttons and a plurality of control commands, wherein, each control command comprises both of a wind direction control command and a fan speed control command, the method comprising:
determining a touch buttons as a target touch button when a user touches the touch button displayed on the operation interface;
determining a wind direction control command and a fan speed control command according to the determined target touch button and the relationship table; and
controlling the air-conditioner to adjust the air volume of the upper air vent and the air volume of lower air vent of the air-conditioner according to the determined wind direction control command, and controlling the air-conditioner to adjust the fan speed of the air-conditioner according to the determined fan speed control command.

9. The method as recited in claim 8, wherein the method is further comprising:
generating the operation interface with the number of touch buttons and displays the operation interface on the touch screen.

10. The method as recited in claim 9, wherein when a touch on one touch button is much closer to the top part of the touch screen, the wind direction control command corresponding to the touch button sets the air volume of the upper air vent of the air-conditioner to be greater and sets the air volume of the lower air vent of the air-conditioner to be less.

11. The method as recited in claim 9, wherein when a touch on one touch button is much closer to the bottom part of the touch screen, the wind direction control command corresponding to the touch button sets the air volume of the upper air vent of the air-conditioner to be less and sets the air volume of the lower air vent of the air-conditioner to be greater.

12. The method as recited in claim 9, wherein when a touch on one touch button is much closer to the left part of the touch screen, the fan speed control command corresponding to the touch button sets the fan speed of the air-conditioner to decrease.

13. The method as recited in claim 9, when a touch on one touch button is much closer to the right part of the touch screen, the fan speed control command corresponding to the touch button sets the fan speed of the air-conditioner to increase.

14. The method as recited in claim 8, wherein the air-conditioner comprises a fan speed controller configured to adjust the fan speed of the air-conditioner and a wind direction controller configured to adjust the air volume of an upper air vent and a lower air vent of the air-conditioner.

15. A method for climate control of a vehicle control system, wherein the vehicle control system comprises a touch screen interface having a plurality of touch buttons, an air-conditioner configured to adjust its wind direction and fan speed, a storage unit configured to store a relationship table showing relationships between the plurality of touch buttons and a plurality of control commands, wherein, each control command comprises both of a wind direction control command and a fan speed control command, the method comprising:
recalling, from a relationship table in response to selection of one of the touch buttons, a wind direction control command and a fan speed control command corresponding to the selected touch button; and
controlling the air-conditioner to adjust the air volume of the upper air vent and the air volume of lower air vent of the air-conditioner according to the determined wind direction control command, and controlling the air-conditioner to adjust the fan speed of the air-conditioner according to the determined fan speed control command.
